# FASCICULE DE BREVET EUROPEEN

(11) **EP 0 975 883 B1**
(45) Date de publication et mention de la délivrance du brevet: **13.08.2003**
(21) Numéro de dépôt: 99903762.5
(22) Date de dépôt: 15.02.1999
(51) Int. Cl.: F16D 13/58, F16D 13/75

(54) **MECANISME D'EMBRAYAGE A DISPOSITIF DE RATTRAPAGE D'USURE COMPORTANT DES MOYENS D'EQUILIBRAGE**
KUPPLUNG MIT NACHSTELLVORRICHTUNG UND AUSWUCHTVORRICHTUNG
CLUTCH MECHANISM WITH WEAR TAKE-UP DEVICE COMPRISING BALANCING MEANS

(30) Priorité: 13.02.1998 FR 9801769; 09.12.1998 FR 9815532
(43) Date de publication de la demande: 02.02.2000
(73) Titulaire: VALEO EMBRAYAGES s.a.s., 80009 Amiens Cedex 1 (FR)
(72) Inventeur: DALBIEZ, André, F-95100 Argenteuil (FR); GRATON, Michel, F-75020 Paris (FR)
(74) Mandataire: Lemaire, Marc
(86) Numéro de dépôt international: FR9900336
(87) Numéro de publication internationale: WO99041516

(56) Documents cités:
- FR-A- 2 550 834
- FR-A- 2 753 503
- GB-A- 2 214 999

## Description

La présente invention concerne un mécanisme d'embrayage, notamment pour véhicule automobile.

L'invention concerne d'une manière générale un embrayage à friction, notamment pour véhicule automobile, et se rapporte plus particulièrement à un embrayage équipé d'un dispositif de rattrapage, ou de compensation, de l'usure due notamment à l'usure de ou des garnitures de friction, ce dispositif opérant au fur et à mesure de l'usure de ou des garnitures.

L'invention se rapporte au mécanisme d'embrayage à friction que comporte de tels embrayages.

Un embrayage à friction classique comporte notamment un couvercle arrière, au moins un plateau avant de pression lié en rotation au couvercle tout en pouvant se déplacer axialement par rapport à celui-ci, des moyens d'appui portés par le plateau de pression, des moyens embrayeurs à action axiale agissant entre le couvercle et les moyens d'appui.

L'embrayage comporte aussi un plateau de réaction appartenant à un volant moteur, éventuellement en deux parties pour formation d'un volant amortisseur ou d'un volant flexible, calé en rotation sur un premier arbre, usuellement un arbre menant tel que le vilebrequin du moteur à combustion interne associé à l'embrayage, et supportant par sa périphérie externe le couvercle auquel est attaché, avec mobilité axiale, le plateau de pression.

Le plateau de pression est solidaire en rotation du couvercle et du plateau de réaction tout en pouvant se déplacer axialement sous la sollicitation de moyens embrayeurs à action axiale commandés par des moyens débrayeurs.

Les moyens débrayeurs peuvent consister de manière connue en des ressorts hélicoïdaux, ou en deux rondelles Belleville montées en série, soumis à l'action de leviers de débrayage formant les moyens débrayeurs.

Généralement, les moyens embrayeurs et débrayeurs appartiennent à une même pièce, par exemple à un diaphragme métallique prenant appui sur le fond du couvercle. Le diaphragme peut être monté en série ou en parallèle avec une rondelle Belleville pour assurer une assistance à l'effort de débrayage.

Un disque de friction, portant classiquement des garnitures de friction à sa périphérie externe, solidaire en rotation d'un arbre, usuellement un arbre mené tel que l'arbre d'entrée de la boîte de vitesses du groupe motopropulseur, est intercalé entre le plateau de pression et le plateau de réaction de façon à être serré entre eux lorsque l'embrayage est en position d'engagement pour transmettre le couple de l'arbre menant à l'arbre mené.

Classiquement, les garnitures de friction sont montées sur un support axialement élastique qui est accouplé de manière rigide ou élastique à un moyeu calé en rotation sur l'arbre mené. Grâce à cette disposition, le disque de friction assiste le diaphragme lors de l'opération de débrayage de l'embrayage.

En variante le support est noyé dans une garniture de friction en sorte que le disque de friction ne comporte qu'une garniture et que le support est axialement rigide.

Classiquement, les moyens embrayeurs, le couvercle et le plateau de pression appartiennent à un ensemble unitaire appelé mécanisme d'embrayage à friction.

Les moyens embrayeurs commandent le déplacement axial du plateau de pression lorsqu'ils sont actionnés par une butée de débrayage par l'intermédiaire des moyens débrayeurs.

Au cours de la durée de vie d'un tel embrayage, la ou les garnitures de friction ainsi que les contre-matériaux, plateaux de pression et de réaction s'usent, ce qui provoque une variation de la position axiale du plateau de pression et celle des moyens embrayeurs à action axiale ainsi que de la butée de débrayage, d'où il s'ensuit une variation de la force de serrage entre le disque de friction d'une part et, d'autre part, les plateaux de pression et de réaction, en raison des modifications des conditions de travail des moyens embrayeurs. La force nécessaire pour débrayer s'en trouve affectée. En dotant un tel embrayage d'un dispositif de rattrapage d'usure, on évite ces inconvénients, les moyens embrayeurs, ainsi que la butée de débrayage, qui est usuellement en appui constant sur les moyens débrayeurs, occupant alors la même position lorsque l'embrayage est en position d'engagement en sorte que l'encombrement axial de l'embrayage est réduit.

Dans le document EP-A-0 875 263 qui est compris dans l'état de la technique selon l'article 54(3) de la CBE, il est proposé un dispositif de rattrapage d'usure comprenant, d'une part, des moyens à rampes portés par le plateau de pression qui portent une denture externe et qui sont placés entre le plateau de pression et les moyens d'appui pour constituer un plateau de pression d'épaisseur variable entre sa face de friction et les moyens d'appui et comprenant, d'autre part, une cassette montée dans un logement du couvercle et comprenant une vis sans fin coopérant avec la denture des moyens à rampes, et du type dans lequel les moyens d'appui, la denture externe et les rampes sont réalisées en une pièce unique en forme d'anneau portée par le plateau de pression.

La vis sans fin de la cassette coopère avec les dents de la denture appartenant à l'anneau de réglage à rampes qui est placé entre les moyens embrayeurs et le plateau de pression.

La vis sans fin coopère avec la denture et avec des moyens d'entraînement en rotation, comprenant un ressort hélicoïdal, qui sont rendus opérationnels par l'usure des garnitures de friction lorsque l'embrayage est engagé. La vis sans fin est montée tangentiellement par rapport à sa denture associée.

En variante la denture appartient à une pièce intermédiaire comme décrit dans le document FR-A- 2 783 580 déposé le 23 Septembre 1998. Les moyens à rampes sont dans tous les cas solidaires en rotation de la denture.

L'agencement d'une cassette, à la périphérie radiale externe du mécanisme, et notamment du couvercle, aboutit à un phénomène de déséquilibrage statique et dynamique du mécanisme qui est générateur de vibrations nuisibles au bon fonctionnement de l'embrayage.

Afin de remédier à cet inconvénient, l'invention propose un mécanisme d'embrayage, caractérisé en ce que le couvercle porte au moins un moyen de prééquilibrage ou d'équilibrage pour compenser le déséquilibre dû à la cassette du dispositif de rattrapage.

Le moyen de prééquilibrage permet de prééquilibrer l'ensemble couvercle-cassette et consiste dans une réalisation en un rivet de prééquilibrage, et/ou en une masse de prééquilibrage. Le moyen d'équilibrage permet d'équilibrer en final le mécanisme d'embrayage et consiste par exemple en un rivet d'équilibrage.

Selon d'autres caractéristiques de l'invention :
- le couvercle comporte plusieurs logements répartis circonférentiellement dans l'un desquels est monté la cassette et dont au moins un autre constitue une zone de montage pour un moyen de prééquilibrage tel qu'un rivet de prééquilibrage ;
- chaque logement comporte un fond arrière, d'orientation transversale ;
- le fond du logement dans lequel est montée la cassette comporte une fenêtre ;
- le fond transversal dudit autre logement constitue la zone de montage pour au moins un rivet de prééquilibrage et/ou une masse de prééquilibrage ;
- le fond transversal dudit autre logement constitue la zone de montage pour trois rivets de prééquilibrage ;
- le plateau de pression est lié en rotation au couvercle par des languettes, déformables élastiquement selon la direction axiale, dont au moins une extrémité est fixée au couvercle, ou au plateau de pression par un rivet qui constitue un rivet de prééquilibrage du mécanisme ;
- le rivet de fixation au couvercle d'une extrémité d'une languette est un rivet de prééquilibrage qui est diamétralement opposé à la cassette ;
- le couvercle comporte un rebord, d'orientation radiale extérieure, pour la fixation du couvercle à un plateau de réaction et qui comporte des trous prévus pour la fixation d'au moins un rivet d'équilibrage du mécanisme d'embrayage ;
- chaque rivet d'équilibrage est fixé au niveau d'une zone élargie dudit rebord formée à la faveur d'une ouverture pour le passage de têtes d'organes de fixation du couvercle au plateau de réaction ;
- ladite ouverture est réalisée dans une jupe d'orientation axiale qui relie ledit rebord au fond transversal du couvercle.

En variante les rivets de prééquilibrage sont remplacés au moins en partie par des masses. Dans ce cas la présence d'un rivet de prééquilibrage associé aux languettes n'est plus indispensable.

D'autres caractéristiques et avantages de l'invention apparaîtront à la lecture de la description détaillée qui suit pour la compréhension de laquelle on se reportera aux dessins annexés dans lesquels :
- la figure 1 est une vue de face d'un mécanisme d'embrayage selon un premier mode de réalisation de l'invention avec des arrachements partiels pour montrer le diaphragme, une languette tangentielle de freinage et le dispositif de rattrapage d'usure comportant la cassette et l'anneau de réglage à rampes ;
- la figure 2 est une vue de face du seul couvercle du mécanisme ;
- les figures 3 et 4 sont des partielles en section selon les lignes 3-3 et 4-4 respectivement de la figure 1 ;
- les figures 5, 6 et 7 sont des vues selon les flèches F5, F6 et F7 de la figure 1 respectivement.

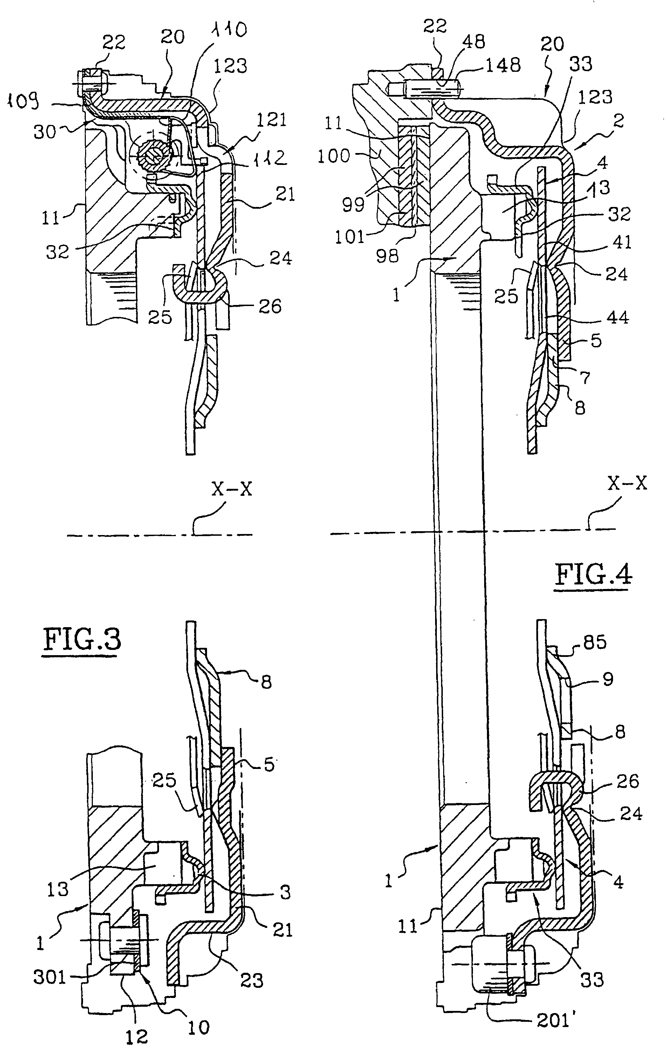

Les figures représentent un mécanisme d'embrayage formant un ensemble unitaire que l'on vient rapporter sur un plateau de réaction 100 (voir figure 4) avec insertion d'un disque de friction 101 entre le plateau de réaction et le plateau de pression 1 que comporte le mécanisme d'embrayage. Le mécanisme présente un axe X-X de symétrie axiale.

S'agissant d'une application pour véhicule automobile, le plateau de réaction 100 est solidaire en rotation du vilebrequin du moteur à combustion interne, formant arbre menant, tandis que le disque de friction 101 présente à sa périphérie externe des garnitures de friction 99 solidaires d'un support 98, éventuellement dédoublé, qui est déformable élastiquement selon la direction axiale et accouplé de manière rigide ou élastique à un moyeu solidaire en rotation, ici de l'arbre d'entrée de la boîte de vitesses, formant arbre mené.

Ce sont les garnitures de friction 99 qui sont donc destinées à être serrées de manière débrayage entre les plateaux de pression 1 et de réaction 100 pour transmettre le couple du moteur du véhicule à l'arbre d'entrée de la boîte de vitesses. Pour ce faire, des moyens embrayeurs 4 à action axiale sont prévus pour serrer les garnitures de friction entre une faces transversale de friction avant 11 que présente frontalement le plateau de pression 1, et une face transversale arrière de friction, que présente dorsalement le plateau de réaction (non représenté sur les figures), qui peut être porté par un disque flexible solidaire du vilebrequin pour formation d'un volant flexible.

Les moyens embrayeurs forment un équipage avec les moyens débrayeurs prévus pour contrecarrer à volonté l'action des moyens embrayeurs qui prennent appui d'une part sur la face interne d'un couvercle arrière 2 et, d'autre part, sur des moyens d'appui 3 portés par le plateau de pression 1 dont ils constituent la face transversale arrière tournée vers le fond du couvercle arrière 2.

En variante le couvercle 2 peut être rapporté sur le disque flexible du volant flexible. Bien entendu une seule garniture de friction 99 peut être prévue, le support 98 étant par exemple noyé en partie dans la garniture 99.

Les moyens débrayeurs comportent par exemple des leviers de débrayage sur les extrémités internes desquelles agit une butée de débrayage (non représentée).

Dans l'exemple illustré sur les figures, les moyens embrayeurs et débrayeurs appartiennent à une même pièce appelée diaphragme 4.

Le diaphragme 4 est de forme générale tronconique à l'état libre et il présente une courbe caractéristique (force exercée en fonction de sa déflexion) de forme sinusoïdale.

On obtient une même courbe caractéristique avec une rondelle Belleville.

Pour mémoire, on notera que le diaphragme 4 comporte une partie périphérique externe en forme de rondelle Belleville 41 constituant les moyens embrayeurs. Cette partie périphérique est prolongée radialement vers le centre en direction de l'axe X-X du mécanisme d'embrayage par une partie centrale fragmentée en doigts radiaux 42, par des fentes borgnes 43. Les doigts 42 forment des leviers de débrayage, tandis que les fentes 43 débouchent à leur périphérie interne dans l'ouverture centrale du diaphragme 4 et à leur périphérie externe dans des orifices élargis 44 formant les fonds borgnes des-fentes 43, ces orifices 44 ayant ici une forme sensiblement rectangulaire. Le couvercle 2 est ici en forme d'assiette creuse et présente un fond troué centralement.

Le mécanisme d'embrayage comporte donc de manière unitaire un ensemble de pièces de forme générale annulaire, à savoir le plateau de pression avant 1, le couvercle arrière 2 et le diaphragme 4 qui prend appui axialement d'une part contre le fond du couvercle 2 et, d'autre part, sur les moyens d'appui 3 pour serrer axialement les garnitures de friction entre la face transversale avant 11 du plateau de pression 1 et la face de friction correspondante du plateau de réaction.

Le plateau de pression 1 est, comme le plateau de réaction, réalisé en matière moulable telle que de la fonte et il est lié en rotation au couvercle 2 tout en pouvant se déplacer axialement par rapport à ce dernier. Cette liaison est ici assurée par des languettes 10, qui sont déformables élastiquement selon la direction axiale et qui sont d'orientation tangentielle en étant fixées, ici par rivetage, à l'une 302 de leurs extrémités au couvercle 2 et à l'autre 301 de leurs extrémités au plateau de pression 1. Plus précisément, chaque languette 10 est fixée à une patte 12 du plateau de pression 1 qui est saillante radialement vers l'extérieur. Les languettes 10 sont d'orientation tangentielle. En variante elles sont d'orientation radiale.

Les languettes 10 constituent des moyens de rappel du plateau de pression 1. Plus précisément, le couvercle 2 présente, d'une part, un fond 21 troué centralement et d'orientation générale transversale perpendiculaire à l'axe X-X et, d'autre part, des moyens 22 de fixation du couvercle 2 au plateau de réaction ou en variante à une autre pièce tel qu'un disque flexible.

Les moyens de fixation sont constitués par un rebord radial d'extrémité 22 du couvercle 2.

Une jupe annulaire 23, d'orientation axiale, relie le rebord 22 au fond 21, le rebord étant dirigé en direction opposée au fond 21, c'est à dire en direction opposée à l'axe X-X.

Le diaphragme 4 s'appuie axialement à la périphérie externe de sa rondelle Belleville 41 sur les moyens d'appui 3, tandis que la périphérie interne de sa rondelle Belleville 41 est montée de manière basculante entre deux appuis axialement en vis-à-vis, respectivement un appui secondaire 25 porté par des pattes de fixation 26 issues par découpe et pliage du fond 21 et un appui primaire 24 porté par le fond 21 du couvercle 2. En position engagée de l'embrayage, le diaphragme 4 est en appui sur l'appui primaire et sur les moyens d'appui 3 du plateau de pression 1 sachant que les pattes 26 traversent axialement les orifices élargis 44 du diaphragme 4.

Pour maintenir, lorsque l'embrayage est embrayé, les moyens embrayeurs à action axiale 4 dans une position indépendante de l'usure des garnitures 99 du disque de friction, et dans une moindre mesure de l'usure des plateaux de pression 1 et de réaction 100 dont les faces, dites de friction formant piste de frottement, s'usent au contact des garnitures du disque de friction, il est prévu un dispositif de rattrapage d'usure qui comprend une cassette 30 et un anneau 200 de réglage à rampes 32.

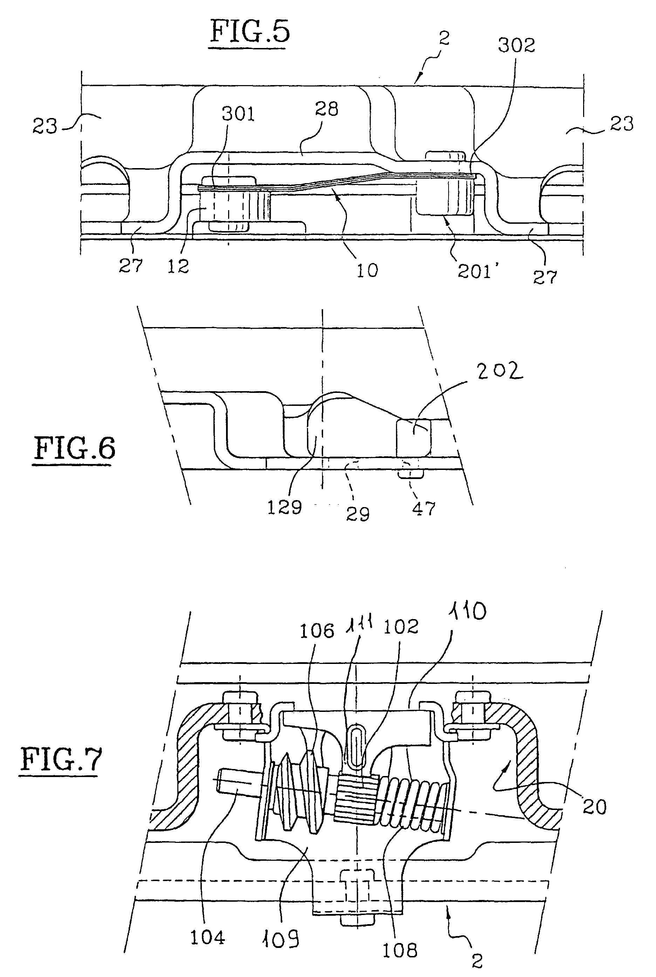

Plus précisément, l'anneau 200 de réglage à rampes 32 est un anneau en tôle découpée et emboutie de façon à présenter des rampes 32 disposées circonférentiellement de manière régulière, l'anneau 200 de réglage présentant également des zones d'appui 3 constituées par l'arête supérieure arrondie d'emboutis en arcs de cercle qui sont centrés sur l'axe X-X de l'embrayage et qui sont placés radialement à l'extérieur par rapport aux rampes 32 (voir notamment figure 5).

Le plateau de pression 1 présente ici, réalisés venus de moulage, sur sa face transversale arrière tournée vers le fond 21 du couvercle 2, des plots 13 répartis circonférentiellement à une distance l'un de l'autre qui correspond à celle qui sépare circonférentiellement deux rampes consécutives 32, les plots 13 étant destinés à coopérer chacun avec une rampe 32.

L'anneau de réglage 200 à rampes 32 est placé axialement entre le diaphragme 4 et le plateau de pression 1 en sorte que les plots 13 coopèrent avec la rampe 32 et que le diaphragme 4 coopère avec les zones d'appui 3 qui constituent ainsi les moyens d'appui, qui sont ici fractionnés mais qui peuvent, en variante, être continus, par l'intermédiaire desquels le diaphragme 4 agit sur le plateau de pression 1.

L'une au moins des zones d'appui 3 de l'anneau 200 de réglage à rampes 32 est prolongé à sa périphérie externe par un rebord 33 parallèle à l'axe X-X, se terminant selon un retour transversal, c'est-à-dire s'étendant radialement vers l'extérieur dans un plan perpendiculaire à l'axe X-X, et qui est muni à sa périphérie externe d'une denture 31 en sorte que le rebord radialement extérieur et d'orientation axiale 33 de l'anneau 200 de réglage est centré par une surépaisseur du plateau de pression 1 dans chacune desquelles est formé un plot 13.

Le plateau de pression 1 a ainsi une épaisseur variable, c'est-à-dire plus précisément que la distance entre sa face frontale avant de friction 11 et les zones d'appui coplanaires 3 varie en fonction des usures précitées.

La cassette 30 du dispositif de rattrapage d'usure comprend, de manière connue, une roue à rochet 102 solidaire d'un axe 104 qui porte également une vis sans fin 106 dont le filet et le pas sont adaptés à la denture 31, ainsi qu'un ressort de rattrapage 108. Ces pièces 102,104,106,108 sont portées par un support 109 fixé par rivetage sur le rebord 22. Le support 109 porte également un organe élastique 110 avec une languette de commande 111 coopérant avec les dents de la roue à rochet 102 et actionné par un appendice 112 du diaphragme 4.

Le fonctionnement général du dispositif de rattrapage de jeu 30, 200 qui vient d'être décrit sommairement est connu et ne sera pas décrit en détail. Si besoin est, on pourra se reporter au contenu du document français FR-A-2 753 503.

On rappellera qu'en cas d'usure l'appendice 112 agit sur la languette 111 qui fait tourner la roue 102 pour armer le ressort 108, qui en se détendant, pousse la vis 106 pour faire tourner la denture 31 et l'anneau 200 lors d'une opération de débrayage.

Les moyens d'appui 3 pour la périphérie externe de la rondelle Belleville 41 du diaphragme 4 sont ainsi constitués par un bossage annulaire d'orientation axiale et fragmenté appartenant à l'anneau 200 de réglage dont les rampes 32 coopèrent avec la face d'extrémité transversale arrière, avantageusement chanfreinée, des plots 13 formant contre-rampes. La vis sans fin 106 est disposée tangentiellement par rapport à la denture, tandis que l'axe 104 est solidaire de la vis 106.

La cassette 30 appartenant au dispositif de rattrapage d'usure permet, en service, de faire tourner l'anneau 200 pour compenser l'usure due principalement aux garnitures de friction du disque de friction. La cassette 30 est montée par son support 109 sur le couvercle 2 avant la fixation du plateau de pression 1 au couvercle.

Plus précisément, on fixe d'abord le diaphragme 4 sur le couvercle 1 à l'aide des pattes de fixation 26 de manière précitée, le diaphragme 4 étant monté basculant entre les deux appuis 24, 25. Ensuite, on monte un anneau 8 avec ses pattes 7 entre des pattes de butée 5 du couvercle 2, 21 et la périphérie interne des doigts 42 du diaphragme 4. Le diaphragme occupe alors une position plane correspondante globalement à celle qu'il occupe une fois que le mécanisme d'embrayage est monté sur le couvercle 2.

Pour plus de précisions sur l'anneau, on se reportera au document FR98 01769.

Le dispositif de rattrapage d'usure maintient le diaphragme dans cette position, qui correspond à la position embrayage engagé neuf. Après, on fixe la cassette 30 et on procède à une opération de prééquilibrage.

Puis on approche le plateau de pression 1 porteur ici de moyens à rampes 32 et donc d'épaisseur variable.

Ensuite, on monte le plateau de pression 1 sur le couvercle 2. Plus précisément, le plateau 1 étant équipé des languettes 10, on fixe les autres extrémités 302 des languettes 10 au couvercle 2, ici en tôle emboutie.

Enfin, on procède en final à une opération d'équilibrage.

Ici, la cassette 30 est montée, avant fixation du plateau de pression 1 au couvercle 2, dans un logement 20 formé en surépaisseur, ici par emboutissage, dans le couvercle 2, au niveau de son rebord de fixation 22. Le logement 20 affecte le rebord 22 ainsi que la jupe 23 du plateau surélevé ainsi au niveau des logements 20.

Le fond axial du logement 20 est formé par une zone transversale 123 de la jupe 23 pour raccordement au fond 21 du couvercle. Une fenêtre 121 est formée dans cette zone 123 parallèle au fond 21 en étant décalée axialement en direction du rebord 22 par rapport au fond 21.

Le nombre de languettes 10 dépend des applications. Ici, trois jeux de languettes 10, éventuellement superposées, sont prévus ainsi que trois logements 20. Les logements 20, ici au nombre de trois, et les languettes 10 sont réparties circonférentiellement de manière régulière et ce de manière alternée.

Un seul des logements 20 est doté d'une fenêtre 121, à savoir celui servant à loger la cassette 30.

La cassette 30, décrite ci-après, crée un déséquilibrage. Pour cette raison, on réalise avant montage du plateau de pression 1, un prééquilibrage à l'aide de rivets 201 de prééquilibrage montés sur les fonds axiaux 123 non troués des logements 20. Trois rivets 201 sont prévus par logement 20, non affectés au logement de la cassette.

Un autre rivet de prééquilibrage 201' est prévu diamétralement opposé à la cassette 30. Ce rivet 201' sert à la fixation d'un jeu de languettes 10 au couvercle 10, comme visible à la figure 5. Le plateau de pression 1 est entaillé localement au niveau du rivet 201'. Tout ceci est du au fait que le plateau de pression est entaillé au niveau de la cassette 30 pour créer un dégagement.

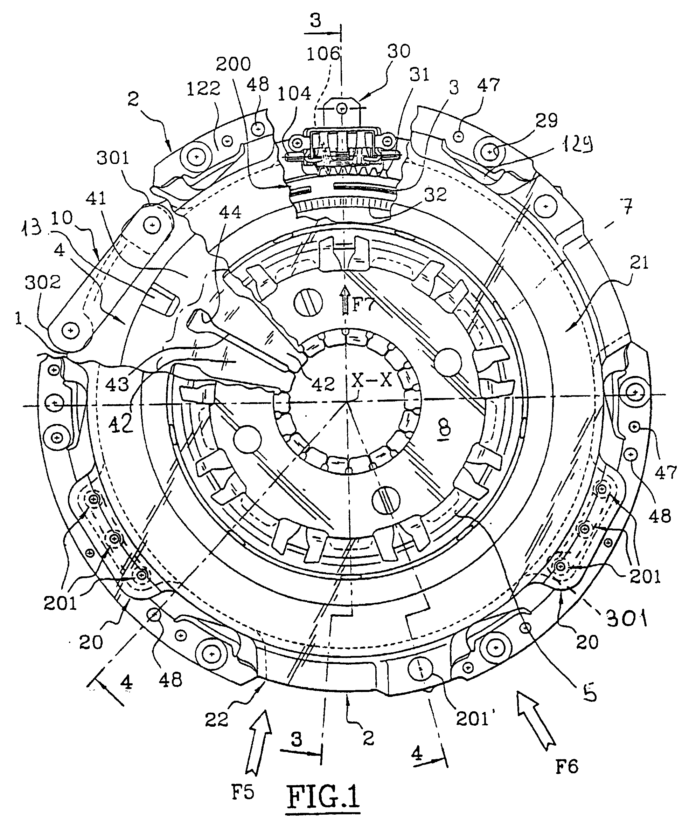

En variante on remplace les rivets 201 d'un logement 20 par une masse de prééquilibrage montée par exemple par rivetage sur les fonds axiaux 123 non troués. Une telle masse a été représentée en 301 à la figure 1. En variante on remplace deux rivets 201 par une masse fixée par rivetage sur le fond 123.

En final, on place des rivets d'équilibrage 202 (figure 6) aux endroits souhaités pour équilibrer le mécanisme d'embrayage.

Le rebord 22 présente à cet effet, par avance, des trous d'équilibrage 47 pour le montage du ou des rivets d'équilibrage 202 du mécanisme d'embrayage. Pour ce faire, de nombreux trous 47 doivent être prévus pour placer les rivets 202. En variante les rivets sont remplacés par des masses d'équilibrage.

Le rebord 22 présente aussi, d'une part, des trous de fixation 29, pour passage des organes de fixation - tels que des vis ou des rivets - du rebord 22 au plateau de réaction et, d'autre part, des trous de centrage 48 pour le passage de pions de centrage 148 (figure 4) portés par le couvercle.

Des ouvertures 129 sont réalisées dans la jupe 23, au niveau des trous de fixation 29 pour le passage ici des têtes des vis de fixation du couvercle 2 au plateau de réaction.

Les ouvertures 129 ont une forme non symétrique. Les trous de fixation 29 et d'équilibrage 47 sont voisins l'un de l'autre. Une paire de trous 29, 47 est prévue par ouverture 129 (figure 6). Un logement 20 est disposé entre deux paires de trous 29,47 comme visible à la figure 1. L'ouverture 129, permet ainsi d'augmenter la surface d'appui du rebord 22 à ce niveau pour les têtes des vis de fixation. L'ouverture 129 est donc allongée circonférentiellement et est plus profonde au niveau du trou 29 ; chacun des trous 29, 47 étant implanté à l'extrémité circonférentielle d'une ouverture.

Chaque rivet d'équilibrage 202 est fixé, comme les vis de fixation, au niveau d'une zone élargie 122 du rebord 22, formée à la faveur de l'ouverture 129.

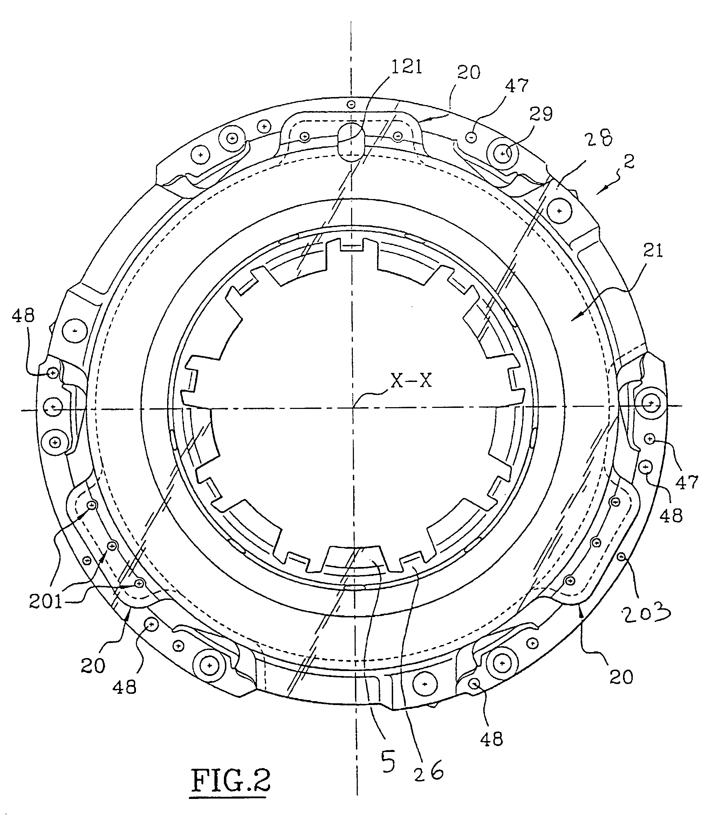

Le rivet 202 ne déborde pas de la zone 122, tandis que les têtes de vis de fixation débordent par rapport aux zones 122. Des ouvertures supplémentaires 203 sont prévues dans le rebord 22 au-dessus des logements 20 (figure 2).

Le rebord 22 comporte ainsi trois plages de fixation 27 pour contact avec le plateau de réaction 200, ici légèrement de forme creuse comme visible à la figure 7. Ces plages 27 (figure 5) alternent circonférentiellement avec les plages 28, décalées axialement par rapport aux plages 27 en direction du fond 21 du couvercle 2 pour fixation, ici par rivetage, des languettes 10, au couvercle. La jupe 23 est donc ouverte à ce niveau ce qui permet le passage de pattes de fixation 12, que présente le plateau de pression 1, en saillie radiale à sa périphérie externe. Les plages 27 servant à la fixation du couvercle 2, sont plus longues que les plages 28 de fixation des languettes reliées de manière continue aux plages 27, pour formation d'un auvent (figure 5).

Les plages 27 sont affectées centralement par des logements 20 en étant moins larges à cet endroit. Chaque extrémité d'une plage 27 est affectée d'une zone élargie 122 et d'une ouverture 129.

Les trous 29, 47 sont donc disposés, ainsi que les zones 122, de part et d'autre d'un logement 20 aux extrémités d'une zone 122.

Ceci permet de bien équilibrer le mécanisme d'embrayage. Il en est d'autant plus ainsi que, figure 3, le plateau de pression est entaillé pour créer un dégagement pour la cassette 30. Cette cassette 30 comporte le support 109 en forme de U avec une âme s'étendant au contact de la déformation de la jupe 23 formant le sommet du logement 20 et deux ailes sont trouées par le passage de l'axe 104, solidaire de la vis sans fin 106, monobloc avec la roue à rochet 102, interposées entre les deux ailes du support 112. La vis est adjacente à l'une des ailes, tandis qu'un ressort hélicoïdal de rattrapage 108 est interposé entre la roue à rochet et l'autre aile.

Le support 109 comporte trois pattes de fixation (non référencées à la figure 1) pour sa fixation par rivetage au rebord 22 et à la zone 123 et donc au couvercle 2.

Bien entendu le rebord 33 peut être lié en rotation à une pièce intermédiaire portant la denture 31 et calée axialement sur le couvercle à l'aide par exemple de prolongements issus de deux languettes 10 superposées. Une liaison intervient entre la pièce intermédiaire et l'anneau 200 pour autoriser un mouvement axial du plateau de pression par rapport à la pièce intermédiaire tout en liant en rotation cette pièce intermédiaire à l'anneau 200. Une telle disposition est décrite dans le document FR98 11991 déposé le 23 Septembre 1998 auquel on se reportera pour plus de précisions.

Bien entendu des moyens de freinage comportant par exemple un jonc de freinage peuvent intervenir entre l'anneau 200 et le plateau de pression. Pour plus de précisions on se reportera par exemple au document FR98 14448 déposé le 17 Novembre 1998 sachant que le jonc de freinage peut être remplacé par une languette d'orientation tangentielle comme visible à la figure 2 du document FR98 01769 déposée le 13 février 1998, dont la présente demande revendique la priorité.

Dans cette demande est décrit l'anneau 8, dont on voit à la figure 4 en 85 l'appui interne sur les doigts du diaphragme et en 9 l'un des trous pour un outil permettant de faire tourner l'anneau 8. Cet anneau 8 intercalé axialement entre les doigts 42 du diaphragme 4 et des pattes de butée 5 que présente intérieurement le fond 21 du couvercle. L'anneau 8 s'étend radialement en-dessous des pattes 5.

Les pattes 5 sont plus larges circonférentiellement que les pattes 26. Les pattes 5, d'orientation radiale, alternent circonférentiellement de manière régulière avec les pattes 26 (figure 2). L'anneau 8 présente des pattes 7 visibles en pointillés à la figure 1. Ces pattes 7 sont montées sous les pattes 5 par un montage du type baïonnette en faisant tourner l'anneau à l'aide d'un ou de plusieurs outils introduits dans les trous 9.

Avant montage du mécanisme d'embrayage sur le plateau de réaction, on met en place l'anneau pour éviter notamment une détérioration de la cassette. L'anneau 8 forme une pièce de support 8 pour des pattes de calage 7. Cette pièce est en contact avec des leviers de débrayage 42.

Après montage du mécanisme sur le plateau de réaction on enlève l'anneau. Cet anneau 8 est équilibré en sorte que l'on peut réaliser les opérations d'équilibrage à l'aide des rivets 202 sans ou avec la présence de l'anneau 8.

D'une manière générale le mécanisme d'embrayage n'est pas forcément équipé d'un anneau 8.

Ainsi qu'on l'aura compris lorsque l'on remplace au moins partiellement les rivets de prééquilibrage 201 par une masse on peut supprimer le rivet de prééquilibrage 201', le couvercle avec la cassette étant prééquilibré grâce aux masses et/ou aux rivets 201.

Bien entendu la cassette 30 peut avoir une autre forme, par exemple celle décrite dans le document FR98/01453 déposé le 5 février 1998 et dans le document PCT/FR99/00261 déposé le 5 février 1998.

Ainsi, à la lumière de cette demande PCT/FR99/00261 l'organe élastique peut former à lui seul le support de la cassette. Le ressort de rattrapage peut être disposé hors de la cassette en étant par exemple implanté entre un plot et une rampe. Dans ce cas, le logement du couvercle peut constituer le support de la cassette.

Les plots 13 peuvent être remplacés par des rampes issues du plateau de pression ou rapportées sur celui-ci.

Grâce aux moyens de prééquilibrage, tels que les rivets 201,201' et/ou des masses de prééquilibrage on réalise un prééquilibrage du couvercle 2 équipé de la cassette 30.

Après on monte le plateau de pression équipé du reste du dispositif de rattrapage d'usure et enfin on réalise un équilibrage de l'ensemble en final. L'invention permet d'équiper aisément le dispositif de rattrapage d'usure de moyens de freinage ou autres, car on peut équilibrer aisément en final le mécanisme d'embrayage, du fait du prééquilibrage couvercle - cassette existant.

L'équilibrage est donc aisé à réaliser.

Bien entendu toutes les combinaisons sont possibles. Ainsi on peut supprimer les rivets de prééquilibrage 201 ou les masses de prééquilibrage implantés au niveau des logements 20 dépourvus de la cassette 30 et réaliser le prééquilibrage à l'aide de rivets 201' associés à tous les jeux de languettes 10, chaque jeu comprenant au moins une languette 10.

## Revendications

1. Mécanisme d'embrayage, du type comportant un couvercle arrière (2), un plateau de pression avant (1) lié en rotation au couvercle (2) tout en pouvant se déplacer axialement par rapport à celui-ci, des moyens d'appui (3) portés par le plateau de pression (1), des moyens embrayeurs (4, 41) à action axiale agissant entre le couvercle (2) et les moyens d'appui (3), et un dispositif de rattrapage d'usure comprenant d'une part des moyens (200) à rampes (32) portés par le plateau de pression (1) qui sont solidaires en rotation d'une denture externe (31) et qui sont placés entre le plateau de pression (1) et les moyens d'appui (3) pour constituer un plateau de pression (1, 200) d'épaisseur variable entre sa face de friction (11) et les moyens d'appui (3) et comprenant, d'autre part, une cassette (30) montée dans un logement (20) du couvercle (2) et comprenant une vis sans fin (106) coopérant avec la denture (31) solidaire en rotation des moyens à rampes (32), le couvercle portant au moins un moyen (201, 201', 202) de prééquilibrage ou d'équilibrage pour compenser le déséquilibre dû à la cassette (30) du dispositif de rattrapage d'usure (30, 200).

2. Mécanisme d'embrayage selon la revendication précédente, **caractérisé en ce que** le couvercle (2) comporte plusieurs logements (20) répartis circonférentiellement dans l'un desquels est monté la cassette et dont au moins un autre constitue une zone de montage pour un moyen de prééquilibrage (201), tel qu'un rivet de prééquilibrage.

3. Mécanisme selon la revendication précédente, **caractérisé en ce que** chaque logement (20) comporte un fond arrière (123), d'orientation transversale.

4. Mécanisme selon la revendication précédente, **caractérisé en ce que** le fond (123) du logement dans lequel est montée la cassette (30) comporte une fenêtre (121).

5. Mécanisme selon la revendication 3, **caractérisé en ce que** le fond transversal (123) dudit autre logement constitue la zone de montage pour au moins un rivet de prééquilibrage (201) et/ou une masse de prééquilibrage.

6. Mécanisme d'embrayage selon la revendication 5, **caractérisé en ce que** le fond transversal (123) dudit autre logement constitue la zone de montage pour trois rivets de prééquilibrage (201).

7. Mécanisme d'embrayage selon la revendication 1, **caractérisé en ce que** le plateau de pression (1) est lié en rotation au couvercle (2) par des jeux d'au moins une languette (10), déformable élastiquement selon la direction axiale, dont au moins une extrémité est fixée au couvercle (2), ou au plateau de pression (1) par un rivet (201') qui constitue un rivet de prééquilibrage du mécanisme.

8. Mécanisme selon la revendication précédente, **caractérisé en ce que** le rivet (201') de fixation au couvercle (2) d'une extrémité d'un jeu d'au moins une languette (10) est un rivet de prééquilibrage (201') qui est diamétralement opposé à la cassette.

9. Mécanisme selon la revendication 1, **caractérisé en ce que** le couvercle (2) comporte un rebord (22), d'orientation radiale extérieure, pour la fixation du couvercle (2) à un plateau de réaction et qui comporte des trous (47) prévus pour la fixation d'au moins un rivet (202) d'équilibrage.

10. Mécanisme selon la revendication précédente, **caractérisé en ce que** chaque rivet d'équilibrage (202) est fixé au niveau d'une zone élargie (122) dudit rebord (22) formée à la faveur d'une ouverture (129) pour le passage de têtes d'organes de fixation du couvercle (2) au plateau de réaction.

11. Mécanisme selon la revendication précédente, **caractérisé en ce que** ladite ouverture (129) est réalisée dans une jupe (23) d'orientation axiale qui relie ledit rebord (22) au fond transversal du couvercle (2).

## Patentansprüche

1. Kupplungsmechanismus, umfassend einen hinteren Deckel (2), eine vordere Druckplatte (1), die drehfest mit dem Deckel (2) verbunden ist, wobei sie sich im Verhältnis zu diesem axial verschieben kann, an der Druckplatte (1) angebrachte Auflagemittel (3), axial wirksame Einrückmittel (4, 41), die zwischen dem Deckel (2) und den Auflagemitteln (3) wirken, und eine Verschleißnachstellvorrichtung, die einerseits an der Druckplatte (1) angebrachte Rampenmittel (200) mit Rampen (32) umfasst, die drehfest mit einer Außenzahnung (31) verbunden sind und die zwischen der Druckplatte (1) und den Auflagemitteln (3) angeordnet sind, um eine Druckplatte (1, 200) mit veränderlicher Dicke zwischen ihrer Reibfläche (11) und den Auflagemitteln (3) zu bilden, und die andererseits eine Kassette (30) umfasst, die in eine Aufnahme (20) des Deckels (2) eingesetzt ist und die eine Schnecke (106) enthält, die mit der drehfest mit den Rampenmitteln mit Rampen (32) verbundenen Zahnung (31) zusammenwirkt, wobei der Deckel wenigstens ein Vorausgleich- oder Ausgleichmittel (201, 201', 202) trägt, um die durch die Kassette (30) der Verschleißnachstellvorrichtung (30, 200) bedingte Unwucht auszugleichen.

2. Kupplungsmechanismus nach dem vorangehenden Anspruch, **dadurch gekennzeichnet, dass** der Deckel (2) mehrere umfangsmäßig verteilte Aufnahmen (20) umfasst, wobei in einer dieser Aufnahmen die Kassette gelagert ist, während wenigstens eine andere dieser Aufnahmen einen Anbringungsbereich für ein Vorausgleichmittel (201), etwa einen Vorausgleichniet, bildet.

3. Mechanismus nach dem vorangehenden Anspruch, **dadurch gekennzeichnet, dass** jede Aufnahme (20) einen quer ausgerichteten hinteren Boden (123) umfasst.

4. Mechanismus nach dem vorangehenden Anspruch, **dadurch gekennzeichnet, dass** der Boden (123) der Aufnahme, in der die Kassette (30) gelagert ist, ein Fenster (121) umfasst.

5. Mechanismus nach Anspruch 3, **dadurch gekennzeichnet, dass** der Querboden (123) der besagten anderen Aufnahme den Anbringungsbereich für wenigstens einen Vorausgleichniet (201) und/oder eine Vorausgleichmasse bildet.

6. Mechanismus nach Anspruch 5, **dadurch gekennzeichnet, dass** der Querboden (123) der besagten anderen Aufnahme den Anbringungsbereich für drei Vorausgleichniete (201) bildet.

7. Mechanismus nach Anspruch 1, **dadurch gekennzeichnet , dass** die Druckplatte (1) drehfest mit dem Deckel (2) durch Gruppen mit wenigstens einer in der axialen Richtung elastisch verformbaren Zunge (10) verbunden ist, von denen wenigstens ein Ende am Deckel (2) oder an der Druckplatte (1) durch einen Niet (201') befestigt ist, der einen Vorausgleichniet des Mechanismus bildet.

8. Mechanismus nach dem vorangehenden Anspruch, **dadurch gekennzeichnet, dass** der Niet (201') zur Befestigung eines Endes einer Gruppe mit wenigstens einer Zunge (10) am Deckel (2) ein Vorausgleichniet (201') ist, der der Kassette diametral gegenüberliegt.

9. Mechanismus nach Anspruch 1, **dadurch gekennzeichnet, dass** der Deckel (2) eine radial nach außen ausgerichtete Randleiste (22) umfasst, die zur Befestigung des Deckels (2) an einer Gegenanpressplatte dient und die Löcher (47) enthält, die zur Befestigung wenigstens eines Ausgleichniets (202) vorgesehen sind.

10. Mechanismus nach dem vorangehenden Anspruch, **dadurch gekennzeichnet dass** jeder Ausgleichniet (202) in Höhe eines erweiterte Bereichs (122) der besagten Randleiste (22) befestigt ist, der mittels einer Öffnung (129) für den Durchgang der Köpfe von Befestigungsorganen zur Befestigung des Deckels (2) an der Gegenanpressplatte ausgebildet ist.

11. Mechanismus nach dem vorangehenden Anspruch, **dadurch gekennzeichnet, dass** die besagte Öffnung (129) in einer axial ausgerichteten Einfassung (23) ausgeführt ist, die die besagte Randleiste (22) mit dem Querboden des Deckels (2) verbindet.

## Claims

1. Clutch mechanism, of the type comprising a rear cover (2), a front pressure plate (1) rotationally connected to the cover (2) whilst being able to move axially with respect to it, support means (3) carried by the pressure plate (1), axially acting engagement means (4, 41) acting between the cover (2) and the support means (3), and a wear take-up device comprising on the one hand means (200) with ramps (32) carried by the pressure plate (1) which are rotationally fixed to external teeth (31) and which are placed between the pressure plate (1) and the support means (3) in order to constitute a pressure plate (1, 200) of variable thickness between its friction face (11) and the support means (3) and comprising on the other hand a cartridge (30) mounted in a housing (20) in the cover (2) and comprising a worm (106) cooperating with the teeth (31) rotationally fixed to the ramp means (32), the cover carrying at least one preliminary-balancing or balancing means (201, 201', 202) for compensating for the imbalance due to the cartridge (30) of the wear take-up device (30, 200).

2. Clutch mechanism according to the preceding claim, **characterised in that** the cover (2) comprises several housings (20) distributed circumferentially, in one of which the cartridge is mounted and at least another one of which constitutes a mounting area for a preliminary-balancing means (201), such as a preliminary-balancing rivet.

3. Mechanism according to the preceding claim, **characterised in that** each housing (20) comprises a transversely oriented rear bottom (123).

4. Mechanism according to the preceding claim, **characterised in that** the bottom (123) of the housing in which the cartridge (30) is mounted comprises a window (121).

5. Mechanism according to Claim 3, **characterised in that** the transverse bottom (123) of the said other housing constitutes the mounting area for at least one preliminary-balancing rivet (201) and/or a preliminary-balancing mass.

6. Clutch mechanism according to Claim 5, **characterised in that** the transverse bottom (123) of the said other housing constitutes the mounting area for three preliminary-balancing rivets (201).

7. Clutch mechanism according to Claim 1, **characterised in that** the pressure plate (1) is rotationally connected to the cover (2) by sets of at least one tongue (10), elastically deformable in the axial direction, at least one end of which is fixed to the cover (2) or to the pressure plate (1) by a rivet (201') which constitutes a preliminary-balancing rivet for the mechanism.

8. Mechanism according to the preceding claim, **characterised in that** the rivet (201') for fixing one end of a set of at least one tongue (10) to the cover (2) is a preliminary-balancing rivet (201') which is diametrically opposed to the cartridge.

9. Mechanism according to Claim 1, **characterised in that** the cover (2) comprises a rim (22), of external radial orientation, for fixing the cover (2) to a reaction plate and which comprises holes (47) provided for fixing at least one balancing rivet (202).

10. Mechanism according to the preceding claim, **characterised in that** each balancing rivet (202) is fixed at a broadened area (122) of the said rim (22) formed by means of an opening (129) for the passage of heads of members for fixing the cover (2) to the reaction plate.

11. Mechanism according to the preceding claim, **characterised in that** the said opening (129) is produced in an axially oriented skirt (23) which connects the said rim (22) to the transverse bottom of the cover (2).
